# EUROPEAN PATENT SPECIFICATION

(11) **EP 2 054 568 B1**
(45) Date of publication and mention of the grant of the patent: **06.05.2015**
(21) Application number: 07800080.9
(22) Date of filing: 10.08.2007
(51) Int. Cl.: E04H 4/16, B01D 29/27, A47L 9/14

(54) **MULTI-LOBE FILTER BAG PRINCIPALLY FOR POOL CLEANER**
FILTERBEUTEL MIT MEHREREN KAMMERN, INSBESONDERE FÜR SCHWIMMBECKENREINIGER
SAC À FILTRE MULTI-LOBES DESTINÉ PRINCIPALEMENT À UN NETTOYEUR DE PISCINE

(30) Priority: 11.08.2006 US 837171 P
(43) Date of publication of application: 06.05.2009
(73) Proprietor: Zodiac Pool Systems, Inc., Vista, CA 92081 (US)
(72) Inventor: BLOCH, Kenneth, A., San Diego, CA 92128 (US); KLIMAS, David, A., Ramona, CA 92065 (US)
(74) Representative: Pavageau, Sabrina
(86) International application number: PCT/US2007/075655
(87) International publication number: WO 2008/019390

(56) References cited:
- US-A- 2 364 069
- US-B2- 6 908 550

## Description

### FIELD OF THE INVENTION

This invention relates to debris filters and more particularly, although not necessarily exclusively, to filter bags for swimming pool cleaners.

### BACKGROUND OF THE INVENTION

U.S. Patent No. 5,863,425 to Herlehy, et al. illustrates a conventional filter bag for use with certain automatic pool cleaners. As disclosed in the Herlehy patent, the bag may be mounted onto a suction mast of a pool cleaner. Debris-laden water is drawn through the suction mast into a mouth of the filter bag, with the bag capturing much of the debris while allowing the drawn water to pass through its porous material. The bag further may include a divider seam defining a rear pocket and a rear seam that may be separated when desired to facilitate removal of debris collected in the rear pocket. A clip may be used to connect the bag to an associated pressure hose to inhibit collapse of the bag under certain conditions.

U.S. Patent No. 6,908,550 to Silverstein details another filter bag. Generally similar to the bag of the Herlehy patent, that of the Silverstein patent includes a mouth, a divider seam, and a separable rear seam in the form of a zipper. The Silverstein patent also discloses using a loop attached to the bag for connecting it to a pressure hose for stability. This Patent discloses a filter bag according to the preamble of claim 1, and a swimming pool cleaner according to the preamble of claim 11.

Described in U.S. Patent Publication No. 2005/0236310 of Meritt-Powell is yet another filter bag of the types disclosed in the Herlehy and Silverstein patents. The bag of the Meritt-Powell publication includes, among other things, a divider seam defined by a spaced series of welds. It also incorporates a ported tab at an upper end for engaging a support member in turn connecting to a pressure hose. According to the Meritt-Powell publication:
the support member engages with the integral tab to prevent the filter bag from draping downwardly over and about the pool cleaner where the bag could otherwise become entangled in the cleaner wheels and/or scrape against pool surfaces.
See Meritt-Powell Publication, p. 4, 0031,11. 22-26 (numerals omitted).

U.S. Patent No. 7,029,583 to Meritt-Powell, finally, depicts filter bags with improved support members in the form of hose clasps. Such clasps, like other support members, tend "to prevent the bag from falling and draping downwardly over the pool cleaner." See Meritt-Powell Patent, col. 2,11. 35-36. Need for the clasps exists because prior component wear in combination with prolonged exposure to water, sun and chemicals in a swimming pool environment can result in inadvertent separation of the filter bag from the supply hose particularly in response to increased weight attributable to collected debris. In addition, such removable support devices are often removed with the filter bag each time the bag is removed to discard the debris accumulated therein, whereby the removable support device is sometimes misplaced or inadvertently thrown away with the discarded debris.
See id., 11. 43-52. The contents of the Herlehy, Silverstein, and Meritt-Powell patents and of the Meritt-Powell publication are incorporated herein in their entireties by this reference.

### SUMMARY OF THE INVENTION

The present invention provides alternate designs for filter bags similar to the types of bags described in the preceding section of this application. Unlike conventional filter bags, which include a single rear pocket behind the divider seam, bags of the present invention incorporate at least two such pockets rearward of the divider. Accordingly, the present bags have a substantially greater volume for retaining debris, reducing the frequency at which they must be emptied.

The dual-lobe structure of preferred embodiments of the invention additionally provides a bag configuration symmetric rearward of the divider seam. This structure provides improved water flow and drag characteristics for cleaners and increases the total area of the openings through which water may pass, thereby reducing back pressure to which the debris-collection components of the cleaners are subjected in use. The lobes, further, may effectively capture an associated hose if desired to facilitate connection of the bag thereto. If, for example, the lobes themselves are fitted with complementary hook-and-loop (Velcro) fasteners, they may be fastened together so as to surround a position of the hose. This approach avoids the need for any separate hose-grasping component. Alternatively or additionally, a conventional loop, clamp, or other device may be used to connect the bag to the associated hose.

Each lobe of the bag is emptied independently of the other lobes. Accordingly, each lobe includes a separable rear (or other) seam to permit its being opened alone.

Bags of the present invention may include cuffs or similar structures permitting their attachment to suction masts of automatic pool cleaners. They may be formed of nylon or other porous mesh material. A seam internal to the bag may connect forward portions of the lobes, and conventional external seams may form top, bottom, and forward boundaries or margins of the filters.

It thus is an object of the present invention to provide dual- or multi-lobe filter bags with more than one pocket for retaining debris according to claim 1.

In an embodiment the filter bags are symmetric rearward of a divider seam.

In an embodiment the filter bags have both increased debris-containing volume and increased total area of openings through which water may flow.

In an embodiment the lobes may be fastened around a section of an associated hose.

The multiple debris-containing pockets are opened independently to facilitate removal of contained debris.

Other objects, features, and advantages of the present invention will be apparent with reference to the remaining text and the drawings of this application.

### BRIEF DESCRIPTION OF THE DRAWINGS

FIG. 1 is a side elevational view of an exemplary filter bag of the present invention.
FIG. 2 is a top plan view of the filter bag of FIG. 1 illustrating its dual-lobe structure as in use.
FIG. 3 is a rear elevational view of the filter bag of FIG. 1 showing the lobes fully extended.

### DETAILED DESCRIPTION

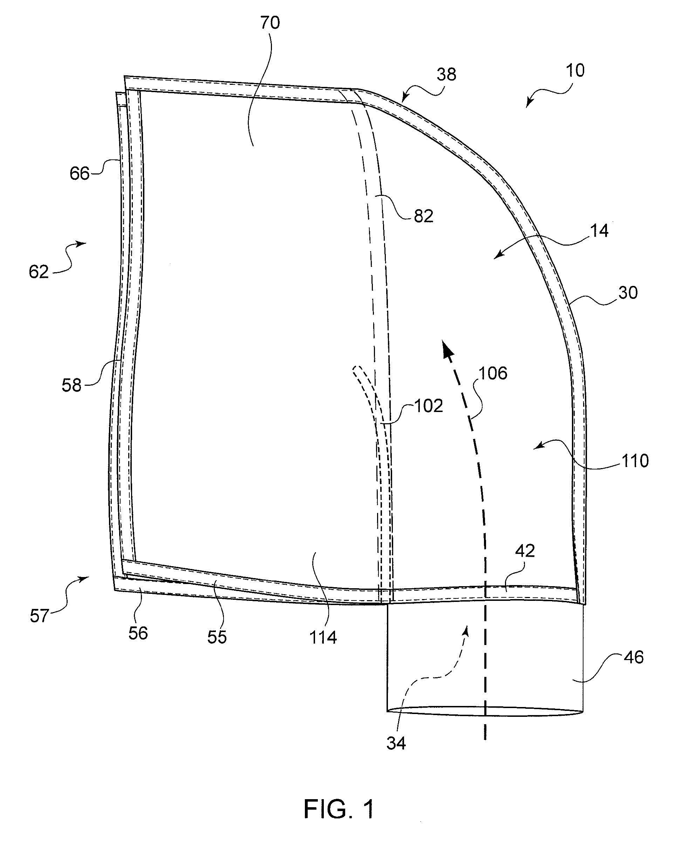

Depicted in FIGS. 1-3 is exemplary bag 10 of the present invention. Bag 10 preferably is to be used with an automatic pool cleaner, such as those shown or referenced in any of the Herlehy, Silverstein, or Meritt-Powell patents or the Meritt-Powell publication. Use of the invention is not necessarily so limited, however, as bag 10 conceivably could be utilized elsewise as appropriate or desired.

Bag 10 advantageously comprises primary walls 14 and 18 and secondary walls 22 and 26. Each of walls 14, 18, 22, and 26 may be formed of one or more sheets or pieces of porous material. In use, water should be able to pass through walls 14, 18, 22, and 26, whereas most or all debris entrained in the water should not. As a result, bag 10 may serve to filter debris from flowing water and retain the filtered debris within the confines of walls 14, 18, 22, and 26.

Sheets forming primary walls 14 and 18 are generally complementary in shape. Walls 14 and 18 are connected to define front margin 30 extending from a generally open lower bag mouth 34 to approximately the top 38 of bag 10. Front margin 30 preferably is curved as shown in FIG. 1. Front margin 30 need not necessarily be curved, however, nor if curved need it be curved in the manner depicted in FIG. 1.

Bag mouth 34 may be created by not interconnecting forward lower edges of walls 14 and 18. FIG. 1 illustrates forward lower edge 42 of wall 14; a similar edge exists for wall 18. Instead, forward lower edge 42 and the corresponding edge of wall 18 may be connected to cuff 46 designed for direct or indirect attachment to, preferably, a suction mast of a pool cleaner. Thus, as so mounted, the entirety of bag 10 is intended to extend above the suction mast.

Unlike conventional bags, bag 10 includes two top margins 50 and 54 and two bottom rear margins 55 and 56. Top margin 50 may be formed by connecting primary wall 14 with secondary wall 22 at top 38 of bag 10. Top margin 54, by contrast, may be formed by connecting primary wall 18 with secondary wall 26 at top 38. Bottom rear margin 55 is formed by connecting primary wall 14 with secondary wall 22 at bottom 57 of bag 10, and bottom rear margin 56 is created by connecting walls 18 and 26 at bottom 57.

Primary wall 14 and secondary wall 22 additionally may be interconnected to form one rear margin 58 at rear 62 of bag 10. A second rear margin 66, also at rear 62, may be created by connecting primary wall 18 and secondary wall 26. Portions of walls 14 and 22 forming rear margin 58 may be fitted with hook-and-loop fasteners, as may portions of walls 18 and 26 forming second rear margin 66. Accordingly, walls 14 and 22 form a first lobe 70 that may be opened at rear margin 58, whereas walls 18 and 26 form a second lobe 74 that may be opened at second rear margin 66.

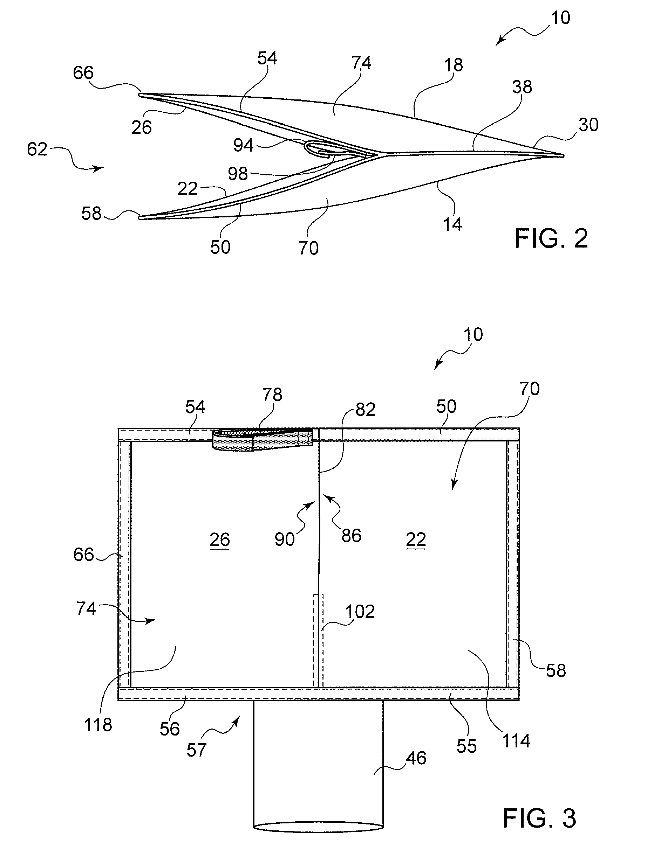

FIGS. 2-3 illustrate optional loop 78. If present, loop 78 preferably, but not necessarily, may be connected to top margin 54 (or top margin 50) adjacent seam 82 connecting forward edges 86 and 90 of respective secondary walls 22 and 26. Loop 78 additionally may be comprised of strips 94 and 98 adapted to be fastened together (to form loop 78) and unfastened (so as to be placed around a suction mast or other supporting object). In a preferred version of loop 78, strips 94 and 98 contain complementary hook-and-loop fasteners.

Alternatively, the loop fastener of loop 78 may be connected instead to second rear margin 66 of second lobe 74, with the corresponding hook fastener being connected to rear margin 58 of first lobe 70 (or vice-versa), so that the hook-and-loop fasteners are in shear as lobes 70 and 74 pull apart during debris fill. This configuration allows lobes 70 and 74 to surround or capture a hose or other object and help to maintain the upright and symmetrical position of bag 10. As yet another alternative, the hook-and-loop fasteners may be configured to create a tensile joint as lobes 70 and 74 pull apart during fill. As the lobes 70 and 74 fill, the complementary hook portion and loop portion of the fasteners could detach to provide visual indication of the filled state of lobes 70 and 74.

Divider seam 102 extends upward from bottom 57 of bag 10 but terminates prior to top 38. Seam 102 interconnects all of walls 14, 18, 22, and 26, defining a primary fluid flow path 106 from mouth 34 upward through forward section 110 of bag 10. Seam 102, further, preferably is generally coincident with (although shorter than) seam 82. To the rear of seam 102 are thus two debris-containing pockets 114 and 118. As debris-laden water flows along path 106 through bag 10, debris too large to exit the bag 10 eventually will settle (under gravity) into either of pockets 114 or 118.

## Claims

1. A filter bag (10) through which water may flow, comprising:
a. means for attachment to a portion of a swimming pool cleaner;
b. a divider defining, at least in part, a flow path for debris-laden water entering the filter bag (10);
**characterized in that** the filter bag (10) comprises:
c. at least first and second pockets (114, 118) configured to receive debris too large to exit the filter bag when in use;
wherein each of the first and second pocket (114, 118) defines part of a respective first and second lobe, with each lobe configured for opening at a rear margin thereof independent of the other lobe so as to facilitate emptying debris from its respective pocket.

2. A filter hag (10) according to claim 1 further comprising an entrance for debris-laden water, the entrance being in fluid communication with the attachment means.

3. A filter bag (10) according to claim 2 in which the divider is in the form of a seam (102) extending from adjacent the entrance.

4. A filter bag according to claim 3 in which the first and second pockets (114, 118) are configured so as to be symmetric rearward of the divider seam (102).

5. A filter bag according to claim 4 further comprising a loop (78) configured for attachment to a supporting object.

6. A filter bag according to one of claims 1 to 5, wherein the filter bag is a water-permeable filter bag (10) comprising:
a. first and second primary walls (14, 18);
b. first and second secondary walls (22, 26);
c. a divider scam (102) interconnecting all of the first and second primary walls (14, 18) and the first and second secondary walls (22,26); and
d. means for attachment to a portion of a swimming pool cleaner; and
in which (i) the first and second primary walls (14, 18) arc connected to define a front margin (30), (ii) the first primary wall and the first secondary wall form a first lobe including a first pocket rearward of the divider seam (102) and configured to receive debris, and (iii) the second primary wall and the second secondary wall form a second lobe including a second pocket rearward of the divider seam (102) and configured to receive debris.

7. A water-permeable filter bag (10) according to claim 6 in which each of the first and second primary walls (14, 18) is connected to the attachment means in an area defining an entrance (34) for debris-laden water.

8. A water-permeable filter bag (10) according to claim 7 in which each of the first and second secondary walls (22, 26) has a forward edge, with the forward edges being connected to form a seam (82).

9. A water-permeable filter bag (10) according to claim 8 further comprising a loop (78) having at least a portion attached to the first secondary wall adjacent the seam (82).

10. A water-permeable filter bag (10) according to claim 6 in which each of the first and second primary walls (14, 18) and the first and second secondary walls (22, 26) comprises at least one sheet of material through which water passes but at least most of any debris entrained in the water does not pass.

11. An automatic swimming pool cleaner comprising:
a. a body;
b. a filter bag (10) comprising a divider defining, at least in part, a flow path for debris-laden water entering the filter bag; and
c. means for attaching the filter bag to the body;
**characterized in that** the filter bag comprises:
at least first and second pockets configured to receive debris too large to exit the filter bag when in use;
and
wherein each of the first and second pocket defines part of a respective first and second lobe, with each lobe configured for opening at a rear margin thereof independent of the other lobe so as to facilitate emptying debris from its respective pocket.

## Patentansprüche

1. Filterbeutel (10), durch den Wasser strömen kann, umfassend:
a. Mittel zur Befestigung an einem Abschnitt eines Schwimmbeckenreinigers;
b. einen Teiler, der mindestens teilweise einen Strömungsweg für schutthaltiges Wasser definiert, das in den Filterbeutel (10) eintritt;
**dadurch gekennzeichnet, dass** der Filterbeutel (10) umfasst:
c. mindestens erste und zweite Taschen (114, 118), die zum Aufnehmen von Schutt konfiguriert sind, der zu groß ist, um den Filterbeutel während der Verwendung zu verlassen;
wobei jede der ersten und zweiten Taschen (114, 118) einen Teil eines entsprechenden ersten und zweiten Lappens definiert, wobei jeder Lappen zum Öffnen an einem hinteren Rand davon unabhängig von dem anderen Lappen konfiguriert ist, um das Entleeren von Schutt aus der jeweiligen Tasche zu erleichtern.

2. Filterbeutel (10) nach Anspruch 1, ferner umfassend einen Eingang für schutthaltiges Wasser, wobei der Eingang in Fluidverbindung mit dem Befestigungsmittel steht.

3. Filterbeutel (10) nach Anspruch 2, wobei der Teiler in Form einer Naht (102) vorliegt, die sich benachbart zum Eingang erstreckt.

4. Filterbeutel nach Anspruch 3, wobei die ersten und zweiten Taschen (114, 118) konfiguriert sind, um hinter der Teilernaht (102) symmetrisch zu sein.

5. Filterbeutel nach Anspruch 4, ferner umfassend eine Schleife (78), die zur Befestigung an einem Stützobjekt konfiguriert ist.

6. Filterbeutel nach einem der Ansprüche 1 bis 5, wobei der Filterbeutel ein wasserdurchlässiger Filterbeutel (10) ist, umfassend:
a. erste und zweite Primärwände (14, 18);
b. erste und zweite Sekundärwände (22, 26);
c. eine Teilernaht (102), die sämtliche erste und zweite Primärwände (14, 18) und die ersten und zweiten Sekundärwände (22,26) verbindet; und
d. Mittel zur Befestigung an einem Abschnitt eines Schwimmbeckenreinigers; und
wobei
(i) die ersten und zweiten Primärwände (14, 18) verbunden sind, um einen vorderen Rand (30) zu definieren,
(ii) die erste Primärwand und die erste Sekundärwand einen ersten Lappen bilden, der eine erste Tasche hinter der Teilernaht (102) aufweist und zum Aufnehmen von Schutt konfiguriert ist, und
(iii) die zweite Primärwand und die zweite Sekundärwand einen zweiten Lappen bilden, der eine zweite Tasche hinter der Teilernaht (102) aufweist und zum Aufnehmen von Schutt konfiguriert ist.

7. Wasserdurchlässiger Filterbeutel (10) nach Anspruch 6, bei dem jede der ersten und zweiten Primärwände (14, 18) mit dem Befestigungsmittel in einem Bereich verbunden ist, der einen Eingang (34) für schutthaltiges Wasser definiert.

8. Wasserdurchlässiger Filterbeutel (10) nach Anspruch 7, wobei jede erste und zweite Sekundärwand (22, 26) eine Vorderkante aufweist, wobei die Vorderkanten verbunden sind, um eine Naht (82) zu bilden.

9. Wasserdurchlässiger Filterbeutel (10) nach Anspruch 8, ferner umfassend eine Schleife (78), wobei mindestens ein Abschnitt davon mit der ersten Sekundärwand benachbart zu der Naht (82) befestigt ist.

10. Wasserdurchlässiger Filterbeutel (10) nach Anspruch 6, wobei jede der ersten und zweiten Primärwände (14, 18) und der ersten und zweiten Sekundärwände (22, 26) mindestens eine Materialbahn umfasst, durch die Wasser laufen kann, wobei aber mindestens der meiste Schutt in dem Wasser diese nicht durchlaufen kann.

11. Automatischer Schwimmbeckenreiniger, umfassend:
a. einen Körper;
b. einen Filterbeutel (10), umfassend einen Teiler, der mindestens teilweise einen Strömungsweg für schutthaltiges Wasser definiert, das in den Filterbeutel eintritt;
c. Mittel zur Befestigung des Filterbeutels an dem Körper;
**dadurch gekennzeichnet, dass** der Filterbeutel umfasst:
mindestens erste und zweite Taschen, die zum Aufnehmen von Schutt konfiguriert sind, der zu groß ist, um den Filterbeutel während der Verwendung zu verlassen; und wobei jede der ersten und zweiten Taschen einen Teil eines entsprechenden ersten und zweiten Lappens definiert, wobei jeder Lappen an einem hinteren Rand zum Öffnen davon unabhängig von dem anderen Lappen konfiguriert ist, um das Entleeren von Schmutz aus der jeweiligen Tasche zu erleichtern.

## Revendications

1. Sac à filtre (10) à travers lequel de l'eau peut s'écouler, comprenant:
a. des moyens d'attache à une partie d'un système de nettoyage de piscines;
b. un diviseur qui définit, au moins en partie, un chemin d'écoulement pour de l'eau chargée de débris qui entre dans le sac à filtre (10),
**caractérisé en ce que** le sac à filtre (10) comprend:
c. au moins des première et deuxième poches (114, 118) configurées de manière à recevoir des débris trop grands pour sortir du sac à filtre lors de l'utilisation,
dans lequel chacune des première et deuxième poches (114, 118) définit une partie d'un premier et d'un second lobes respectifs, chaque lobe étant configuré pour s'ouvrir au niveau d'une bordure arrière de celui-ci indépendamment de l'autre lobe de manière à faciliter l'évacuation des débris hors de leur poche respective.

2. Sac à filtre (10) selon la revendication 1, comprenant en outre une entrée pour de l'eau chargée de débris, l'entrée étant en communication fluidique avec les moyens d'attache.

3. Sac à filtre (10) selon la revendication 2, dans lequel le diviseur se présente sous la forme d'une couture (102) qui s'étend à partir des abords de l'entrée.

4. Sac à filtre selon la revendication 3, dans lequel les première et deuxième poches (114, 118) sont configurées de manière à être symétriques vers arrière de la couture de division (102).

5. Sac à filtre selon la revendication 4, comprenant en outre une boucle (78) configurée pour être fixée à un objet de support.

6. Sac à filtre selon l'une quelconque des revendications 1 à 5, dans lequel le sac à filtre est un sac à filtre perméable à l'eau (10), comprenant:
a. des première et deuxième parois primaires (14, 18) ;
b. des première et deuxième parois secondaires (22, 26);
c. une couture de division (102) qui interconnecte chacune des première et deuxième parois primaires (14, 18) et des première et deuxième parois secondaires (22, 26); et
d. des moyens d'attache à une partie d'un système de nettoyage de piscines, et
dans lequel (i) les première et deuxième parois primaires (14, 18) sont connectées afin de définir une bordure avant (30), (ii) la première paroi primaire et la première paroi secondaire forment un premier lobe comprenant une première poche située en arrière de la couture de division (102) et configurée de manière à recevoir des débris, et (iii) la deuxième paroi primaire et la deuxième paroi secondaire forment un second lobe comprenant une deuxième poche située en arrière de la couture de division (102) et configurée de manière à recevoir des débris.

7. Sac à filtre perméable à l'eau (10) selon la revendication 6, dans lequel chacune des première et deuxième parois primaires (14, 18) est connectée aux moyens d'attache dans une région qui définit une entrée (34) pour de l'eau chargée de débris.

8. Sac à filtre perméable à l'eau (10) selon la revendication 7, dans lequel chacune des première et deuxième parois secondaires (22, 26) présente un bord avant, les bords avant étant connectés pour former une couture (82).

9. Sac à filtre perméable à l'eau (10) selon la revendication 8, comprenant en outre une boucle (78) dont au moins une partie est attachée à la première paroi secondaire à proximité de la couture (82).

10. Sac à filtre perméable à l'eau (10) selon la revendication 6, dans lequel chacune des première et deuxième parois primaires (14, 18) et des première et deuxième parois secondaires (22, 26) comprend au moins une feuille de matière à travers laquelle de l'eau passe mais au moins la majeure partie des débris entraînés dans l'eau ne passent pas.

11. Système de nettoyage automatique de piscines, comprenant:
a. un corps;
b. un sac à filtre (10) comprenant un diviseur qui définit au moins en partie un chemin d'écoulement pour de l'eau chargée de débris qui entre dans le sac à filtre; et
c. des moyens d'attache du sac à filtre au corps, **caractérisé en ce que** le sac à filtre comprend:
au moins des première et deuxième poches configurées de manière à recevoir des débris trop grands pour sortir du sac à filtre lors de l'utilisation, et
dans lequel chacune des première et deuxième poches définit une partie d'un premier et d'un second lobes respectifs, chaque lobe étant configuré pour s'ouvrir au niveau d'une bordure arrière de celui-ci indépendamment de l'autre lobe de manière à faciliter l'évacuation des débris hors de leur poche respective.
